# EUROPEAN PATENT APPLICATION

(11) **EP 1 389 736 A1**
(43) Date of publication of application: **18.02.2004**
(21) Application number: 03255089.9
(22) Date of filing: 15.08.2003
(51) Int. Cl.: G02B 6/44

(54) **Storage tray for optical fibre cable joints**

(30) Priority: 16.08.2002 GB 0219225
(71) Applicant: SPIRENT PLC, Crawley, West Sussex RH10 2QL (GB)
(72) Inventor: Badman,Matthew, Plymstock,Plymouth PL9 7RJ (GB)
(74) Representative: Gibson, Stewart Harry

(57) **Abstract**

Optical fibres are retained in a channel-section entry port of a storage tray by a retaining member which comprises a body of resilient material formed with a through-passage (22) to receive the optical fibres, opposite sides of the retaining member being formed with transverse grooves (23) to receive ribs provided on opposite sides of the entry port of the storage tray. The opposite sides of the retaining member are also formed with longitudinal grooves (24).

## Description

The present invention relates to enclosures for joints between optical fibre cables, and more particularly to arrangements for retaining optical fibres or groups of optical fibres in splice storage trays of such enclosures.

It is common for optical fibre cable joint enclosures to comprise a plurality of trays to receive splices between individual fibres. When installing an enclosure, it is advantageous to run the fibres of the incoming and outgoing cables into respective trays: a number of fibres are then coiled in each tray and remain stored in this manner until a splice is required to be made to them, at some subsequent time. Different fibres may be required for splicing at different times but remain stored in their respective trays meanwhile.

It will be appreciated that it is therefore desirable to be able, in an easy manner, to remove coiled fibres from their storage tray, when required, carry out the necessary splicing operation, then return the spliced fibres to the same or another tray within the enclosure. Typically fibres enter and leave their tray through a port in the form of a U-shaped channel, in which the fibres are retained by a cable tie passed around them and through apertures formed in side walls of the channel. The arrangement does not facilitate the easy removal and introduction of optical fibres relative to the tray. Also, cable ties require manual tensioning which can, if excessive, cause the fibre-carrying tube, and the fibres within, to be crushed, resulting in signal loss.

In accordance with the present invention, there is provided a storage tray for an optical fibre cable joint enclosure, the tray having at least one port for the entry into the tray of optical fibres, said port being in the form of an open-top channel and being provided with a retaining member of resilient material which is formed with a through-passage to receive optical fibres, the retaining member being insertable into said channel as an interference fit and having transverse grooves in its opposite sides, to receive ribs provided on the opposite sides of said channel.

It will be appreciated that the retaining member is easily inserted into the channel of its port via the open top of the latter and is correspondingly easy to remove. The arrangement accordingly facilitates the easy removal or introduction of optical fibres relative to the tray.

The engagement of the ribs of the channel in the transverse grooves of the retaining member is effective in inhibiting the retaining member from inadvertently working loose, e.g. through successive flexures of the optical fibres passing through it.

Preferably the retaining member is formed with a longitudinal split, to enable fibres to be removed from or introduced into its through-passage by a sideways movement of the fibres, instead of threading them through the retaining member.

The passage through the retaining member may be generally circular in cross-section, suited to receive a single bundle of fibres contained within a cylindrical sleeve or tube. Instead, the passage through the retaining member may have a cross-section which is generally polygonal (particularly triangular, square, pentagonal or hexagonal) with rounder-off corners: the passage is then suited to receiving a corresponding plurality of bundles of fibres, each bundle within its own tube or sleeve.

The retaining member is particularly suited to receive one or more bundles of fibres having an outer tube or sleeve which is helically split, or even longitudinally split: because the fibre bundle is embraced substantially all around its periphery, the split sleeve or tube is held in a cylindrical configuration, instead of being opened out (which occurs when bound by a cable tie).

Preferably the opposite sides of the retaining member are formed with longitudinal grooves: this has the effect of reducing the compressive forces acting on the retaining member along the corresponding zones of its opposite sides, resulting in the retaining member being gripped, in the transverse direction between the opposite sides of the entry port, in a more uniform manner over the whole of its opposite sides.

Also in accordance with the present invention, there is provided a retaining member for retaining one or more optical fibres in an entry port of a splice storage tray, said retaining member comprising a body of resilient material formed with a through-passage to receive said optical fibres and having opposite sides formed with transverse grooves to receive ribs provided in opposite sides of said entry port.

Preferably the opposite sides of the retaining member are formed with longitudinal grooves, preferably in a plane containing the axis of the through-bore.

Preferably the retaining member comprises an elongate body of rectangular cross-section.

An embodiment of the present invention will now be described by way of example only and with reference to the accompanying drawings, in which:
FIGURE 1 is a plan view of a tray for an optical fibre cable joint enclosure; and
FIGURE 2 is an enlarged view of a retaining member to retain fibres in the entry ports of the tray shown in Figure 1.

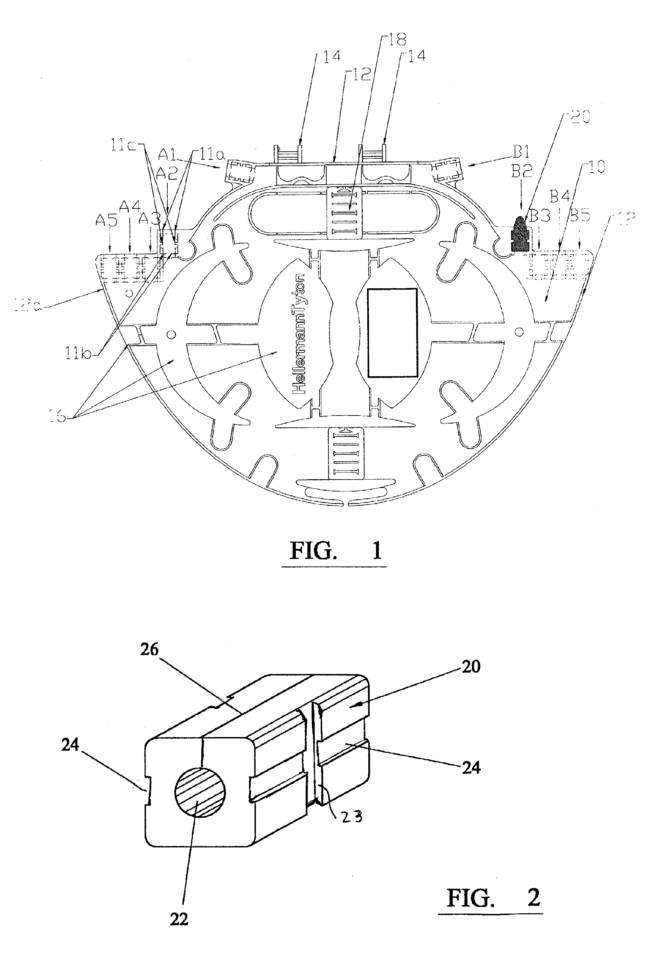

Referring to Figure 1, there is shown a tray for use in an optical fibre cable joint enclosure, the enclosure including a plurality of such trays. The tray comprises a generally flat base 10 on which a peripheral wall 12 stands. A pair of brackets 14 project from the peripheral wall 12, to one side of the tray, to provide for pivotal mounting of the tray to a support member within the enclosure. The tray which is shown is formed with ten ports A1 to A5 and B1 to B5 for the entry of 5 optical fibres into the tray. Each port is formed by two parallel wall sections. Each port is accordingly in the form of a generally rectangular-section, open-top channel. The opposite side walls of each such channel are formed with three vertically-extending, spaced-apart pairs of ribs e.g. 11a, 11b, 11c for port A2.

The base 10 of the tray is also formed with a number of formations e.g. 16 which define various paths in which the optical fibres may be laid and retained within the tray. Thus, the fibres may be coiled loosely within the tray until required for splicing. Once splices are formed, these may be retained between splice-retaining ribs, a series of such ribs being shown at 18 on a separate clip-in splice protector.

For each fibre entry port, a retaining member 20 as shown in Figure 2 is provided, one such retaining member being shown fitted to port B2 in Figure 1. The retaining member 20 is formed of resilient plastics material and is in the form of an elongate block of rectangular cross-section and having an axial through-bore 22. Two opposite sides of the retaining member 20 are formed with grooves 23 extending perpendicular to its length and mid-way between its opposite ends, and also with grooves 24 extending along its length and mid-way between the ends of the respective grooves 23: the longitudinal grooves 24 are shallower in depth than the transverse grooves 23. Further, another side of the retaining member is formed with a longitudinal split 26 which extends into the through-bore 22.

It will be appreciated that optical fibres can be introduced into the through-bore 22 of the retaining member either by threading them through the bore from one end, or by passing them sideways through the longitudinal split 26. A bundle of fibres may be introduced into the retaining member: the bundle may for example be contained within a tube or sleeve; the bundle may have an outer, protective spiral binding.

The retaining member 20 is arranged to be inserted into any of the fibre entry ports, fitting between the outer pairs 5 of ribs e.g. 11a, 11b of the port and with its transverse grooves 23 receiving the intermediate pair of ribs e.g. 11c. The retaining member 20 is inserted into the port through the open top of the channel forming the port , but is retained as an interference fit with the retaining member slightly compressed between the opposite sides of the port and also, in the lengthwise direction, between the pairs of ribs e.g. 11a and 11c, 11c and 11b. It is found that the engagement of the intermediate pair of ribs e.g. 11c of the port in the transverse grooves 23 of the retaining member is effective in inhibiting the retaining member from inadvertently working loose, e.g. through successive flexures of the optical fibres passing through it. Also, the longitudinal grooves 24 serve to relieve the compressive forces acting on the retaining member along the central zones of its opposite sides, with the result that the retaining member is compressed and thereby gripped, in the transverse direction, in a more uniform manner over the whole areas of its opposite sides, helping to hold the member more securely in place.

Preferably, as shown in Figure 1, the retaining member 20 includes a tapering projection at one end, through which the bore 22 extends, to provide some flexible support for the fibre at its entry into the port.

It will be appreciated that the use of the retaining members, as an interference fit into the fibre entry ports, facilitates the quick and easy introduction of fibres to, or removal of fibres from, the tray as and when required.

## Claims

1. A storage tray for an optical fibre cable joint enclosure, the tray having at least one port for the entry into the tray of optical fibres, said port being in the form of an open-top channel and being provided with a retaining member of resilient material which is formed with a through-passage to receive optical fibres, the retaining member being insertable into said channel as an interference fit and having transverse grooves in its opposite sides, to receive ribs provided on the opposite sides of said channel.

2. A storage tray as claimed in claim 1, in which said retaining member is formed with a longitudinal split, enabling fibres to be removed from or introduced into its said through-passage by a sideways movement of the fibres.

3. A storage tray as claimed in claim 1 or 2, in which said through-passage of the retaining member is generally circular in cross-section.

4. A storage tray as claimed in claim 1 or 2, in which said through-passage of the retaining member is generally polygonal in cross-section.

5. A storage tray as claimed in any preceding claim, in which said opposite sides of the retaining member are formed with longitudinal grooves.

6. A retaining member for retaining one or more optical fibres in an entry port of a splice storage tray, the retaining member comprising a body of resilient material formed with a through-passage to receive said optical fibres and having opposite sides formed with transverse grooves to receive ribs provided in opposite sides of said entry port.

7. A retaining member as claimed in claim 6, in which said opposite sides of said body are formed with longitudinal grooves.

8. A retaining member as claimed in claim 7, in which said longitudinal grooves are disposed in a common plane which also contains the longitudinal axis of said through-passage.

9. A retaining member as claimed in any one of claims 6 to 8, in which said body is elongate in form and rectangular in cross-section.

10. A retaining member substantially as herein described with reference to the accompanying drawings.
